# EUROPÄISCHE PATENTANMELDUNG

(11) **EP 1 783 400 A1**
(43) Veröffentlichungstag der Anmeldung: **09.05.2007**
(21) Anmeldenummer: 06123219.5
(22) Anmeldetag: 31.10.2006
(51) Int. Cl.: F16H 7/12

(54) **Spannvorrichtung für einen Zugmitteltrieb**

(30) Priorität: 08.11.2005 DE 102005053215
(71) Anmelder: Schaeffler KG, 91074 Herzogenaurach (DE)
(72) Erfinder: Painta, Ralph, 91469 Hagenbüchach (DE)

(57) **Zusammenfassung**

Die Erfindung betrifft eine Spannvorrichtung für einen Zugmitteltrieb, wie einen Riemen- oder Kettentrieb, mit einem ortsfesten Basisteil (1) und mit einer in dem Basisteil (1) über eine Gleitlagerung (3) gelagerten Welle (4), die einenends mit einem mittels einer Torsionsfeder (5) zum Basisteil (1) vorgespannten Spannrollenträger (6) mit Spannrolle (7) und anderenends mit einer Reibscheibe (8) dreh- und achsfest verbunden ist, wobei sich der Spannrollenträger (6) und die Reibscheibe (8) ferner axial am Basisteil (1) abstützen und der Verbindungsbereich (10) des Spannrollenträgers (6) mit der Welle (4) durch einen axial frei aus dem Spannrollenträger (6) auskragenden Hohlzapfen (11) gebildet ist.

Zur Vergrößerung der Abstützlänge der Gleitlagerung (3) und Minimierung der Distanz "s" zwischen der Mitte von Zugmittel oder Spannrolle (7) und der Mitte der Gleitlagerung (3) erstreckt sich dieselbe bis in den Bereich der Stirnwandung (12) des Spannrollenträgers (6) oder darüber hinaus bis in den Bereich des Hohlzapfens (11).

## Beschreibung

### Gebiet der Erfindung

Die Erfindung bezieht sich auf eine Spannvorrichtung für einen Zugmitteltrieb, wie einen Riemen- oder Kettentrieb, mit einem ortsfesten Basisteil und mit einer in dem Gehäuse über eine Gleitlagerung gelagerte Welle, die einenends mit einem mittels einer Torsionsfeder zum Basisteil vorgespannten Spannrollenträger mit einer Spannrolle und anderenends mit einer Reibscheibe dreh- und achsfest verbunden ist, wobei sich der Spannrollenträger und die Reibscheibe axial am Basisteil abstützen und der Verbindungsbereich des Spannrollenträgers mit der Welle durch einen axial frei aus dem Basisteil auskragenden Hohlzapfen gebildet ist.

### Hintergrund der Erfindung

Derartige Spannvorrichtungen sind seit geraumer Zeit, beispielsweise aus der DE 92 18 566 U1, DE 93 20 478 U1, DE 199 46 057 A1, DE 100 55 594 A1, DE 102 60 558 A1 bekannt.

In der Praxis hat sich herausgestellt, dass infolge der relativ großen Distanz zwischen der Riemenkrafteinleitung und der Mitte der Gleitlagerung ein Moment erzeugt wird, welches zur Verkippung des Hebelarms des Spannrollenträgers und in der Folge zu erhöhter Gleitlagerbelastung sowie demgemäß reduzierter Lebensdauer der Spannvorrichtung führen kann.

Um diesem Problem zu begegnen, ist man bestrebt, die Abstützlänge der Gleitlagerung zu vergrößern, welches zum einen sicherlich unproblematisch zu realisieren wäre, indem das Basisteil samt angeschlossenem Spannrollenträger und angeschlossener Reibscheibe axial größer baut. Aufgrund des insbesondere im Kraftfahrzeugbau vorhandenen geringen Bauraums ist eine solche Maßnahme jedoch nur in Grenzen möglich oder gänzlich ausgeschlossen. Ferner ist auch ein erhöhtes Gewicht zu verzeichnen, welches allein durch eine etwaige Minderung von Wandstärken nicht zu kompensieren ist, da aus Festigkeitsgründen immer eine bestimmte Wandstärke für den Verbindungsbereich der Welle mit dem Spannrollenträger und der Reibscheibe zu berücksichtigen ist.

Zwar ist in der DE 92 18 566 U1 eine Spannvorrichtung mit einem Verbindungsbereich des Spannrollenträgers mit der Welle offenbart, der durch einen axial frei aus dem Spannrollenträger auskragenden Hohlzapfen gebildet ist, jedoch ist auch hierbei die Abstützung der Welle am Basisteil durch die Stirnwände von Spannrollenträger und Reibscheibe begrenzt.

Des Weiteren ist es allgemein bekannt, dass bei Zugmitteltriebanwendung zur Montage und Demontage des Zugmittels, welches ein Riemen oder eine Kette sein kann, die Spannvorrichtung in eine Montageposition überführt werden muss, um freie Zugmittellänge zu erhalten.

Bekannte Konzepte sehen dabei eine Positionierung einer entsprechenden Vorrichtung bzw. eines geeigneten Werkzeugs außerhalb der Drehachse des Spannrollenträgers vor.

Aus der DE 92 18 566 U1 ist ferner eine Riemenspanneinrichtung bekannt, die eine so genannte Belastungseinrichtung für die Spannrolle zum Aufbringen einer vorbestimmten Riemenspannung umfasst, welche außerhalb besagter Drehachse des Spannrollenträgers angeordnet ist und infolgedessen groß baut.

### Aufgabe der Erfindung

Der Erfindung liegt die Aufgabe zugrunde, eine Spanneinrichtung für einen Zugmitteltrieb zu schaffen, die bei minimalem Bauraumbedarf eine verbesserte Abstützung der Welle am Basisteil, also eine größere Abstützlänge vorsieht. Ebenso ist es eine Aufgabe der Erfindung, eine Möglichkeit zu eröffnen, die Spannvorrichtung mit geringem Aufwand mittels eines geeigneten Werkzeugs in eine Montageposition zu überführen.

### Zusammenfassung der Erfindung

Ausgehend von einer Spannvorrichtung für einen Zugmitteltrieb, wie einen Riemen- oder Kettentrieb, mit einem ortsfesten Basisteil und mit einer in dem Basisteil über eine Gleitlagerung gelagerten Welle, die einenends mit einem mittels einer Torsionsfeder zum Basisteil vorgespannten Spannrollenträger mit Spannrolle und anderenends mit einer Reibscheibe dreh- und achsfest verbunden ist, wobei sich der Spannrollenträger und die Reibscheibe axial am Basisteil abstützen und der Verbindungsbereich des Spannrollenträgers mit der Welle durch einen axial frei aus dem Spannrollenträger auskragenden Hohlzapfen gebildet ist, wird diese Aufgabe dadurch gelöst, dass zur Vergrößerung der Abstützlänge der Gleitlagerung und Minimierung der Distanz "s" zwischen der Mitte des Zugmittels oder der Spannrolle und der Mitte der Gleitlagerung sich die Gleitlagerung bis in den Bereich der Stirnwandung des Spannrollenträgers oder darüber hinaus bis in den Bereich des Hohlzapfens erstreckt.

Gemäß einer vorteilhaften Weiterbildung einer Spannvorrichtung gemäß der Erfindung ist vorgesehen, dass zumindest ein Endabschnitt des Hohlzapfens oder der Welle zur Aufnahme eines Montagewerkzeugs ausgebildet ist, welches gestattet, die Spannvorrichtung in eine Montageposition zu überführen beziehungsweise zu verschwenken.

Wie die Erfindung weiter vorsieht, kann die Welle durch einen Presssitz und eine Rändelung mit dem Hohlzapfen und der Reibscheibe verbunden und/oder mit denselben verstemmt sein.

### Kurze Beschreibung der Zeichnungen

Die Erfindung wird im Folgenden anhand der beiliegenden Zeichnung näher erläutert. Darin zeigt
- Fig. 1: eine Schnittdarstellung der erfindungsgemäß ausgebildeten Spannvorrichtung, und
- Fig. 2: eine Stirnseitenansicht der Spannvorrichtung gemäß Fig. 1 aus Richtung der Spannrolle.

### Detaillierte Beschreibung der Zeichnungen

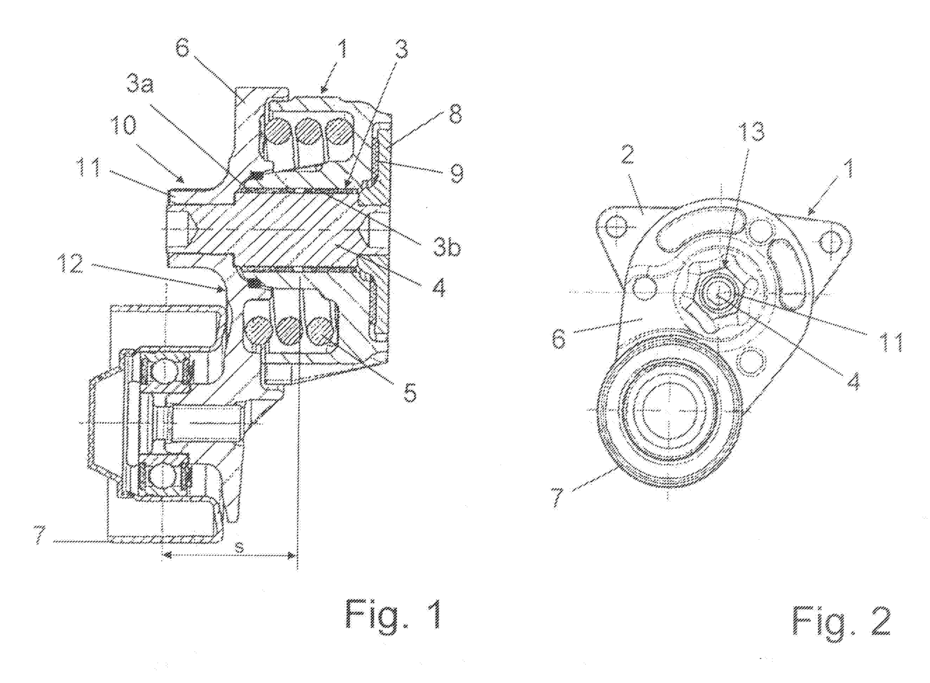

Die Figuren 1 und 2 zeigen demnach eine Spannvorrichtung für einen Zugmitteltrieb, der beispielsweise durch einen Riemen- oder Kettentrieb an einer Brennkraftmaschine eines Kraftfahrzeugs gebildet sein kann. Die Spannvorrichtung weist zunächst ein ortsfestes Basisteil 1 auf, welches beispielsweise an einem nicht näher gezeigten Kurbelgehäuse einer Brennkraftmaschine über in Fig. 2 gezeigte Flansche 2 mittels mechanischer Befestigungsmittel, vorzugsweise Verschraubungen, befestigt ist.

Innerhalb des Basisteils 1 ist über eine Gleitlagerung 3, bestehend aus einer oder mehreren, vorliegend zwei Gleitlagerbuchsen 3a, 3b, eine Welle 4 gelagert, die einenends mit einem mittels einer Torsionsfeder 5 zum Basisteil 1 vorgespannten Spannrollenträger 6 mit Spannrolle 7 dreh- und achsfest verbunden ist. Anderenends ist die Welle 4 mit einer an sich bekannten Reibscheibe 8 ebenfalls dreh- und achsfest verbunden. Die Reibscheibe 8, die ihrerseits axial mit einem Reibbelag 9 am Basisteil 1 in Wirkverbindung steht, dient hier im Wesentlichen als Dämpfungsglied, um ein Schwingen der Spannrolle 7 und des Spannrollenträgers 6 auf dem Basisteil 1 zu verhindern, wenigstens jedoch zu vermindern. Wie der Fig. 1 weiter zu entnehmen ist, stützen sich der Spannrollenträger 6 über die Torsionsfeder 5 und die Reibscheibe 8 über den Reibbelag 9 axial am Basisteil 1 ab.

Die dreh- und achsfeste Verbindung zwischen der Welle 4 und dem Spannrollenträger 6 sowie der Reibscheibe 8 wird vorzugsweise durch einen Presssitz und eine Rändelung an der Welle 4 bewerkstelligt, welches sowohl für die hier gezeigte Vollwelle als auch für eine ebenso anwendbare Hohlwelle (nicht näher gezeigt) vorteilhaft ist. Möglich ist es auch und demgemäß durch die Erfindung mit erfasst, die Welle 4, vorzugsweise in Form einer Vollwelle, zu verstemmen.

Vorliegend ist der Verbindungsbereich 10 des Spannrollenträgers 6 mit der Welle 4 durch einen axial frei aus dem Spannrollenträger 6 auskragenden Hohlzapfen 11 gebildet. Um aufgabengemäß eine verbesserte Abstützung der Welle 4 am Basisteil 1 zu bewerkstelligen, erstreckt sich die Gleitlagerung 3 gemäß dem gezeigten Ausführungsbeispiel axial bis in den Bereich der Stirnwandung 12 des Spannrollenträgers 6. Zur noch weiteren Verbesserung der Abstützung bzw. Vergrößerung der Abstützlänge kann es auch angezeigt sein, dass sich die Gleitlagerung 3 über die Stirnwandung 12 hinaus bis in den Bereich des Hohlzapfens 11 erstreckt, welches einfach und kostengünstig realisierbar ist, indem lediglich die Formgebung des Spannrollenträgers 6 und des angeschlossenen Hohlzapfens 11 entsprechend anzupassen.

Durch diese Maßnahmen sind im Hinblick auf Spannvorrichtungen gemäß den Stand der Technik zum einen die genannte Vergrößerung der Abstützlänge der Gleitlagerung 3 und zum anderen eine Minimierung der Distanz "s" zwischen der Mitte des Zugmittels bzw. der Mitte der Spannrolle 7 und der Mitte der Gleitlagerung 3 zu verzeichnen, wodurch ein nachteiliges Kippmoment des Hebelarms des Spannrollenträgers 6, einhergehend mit einer erhöhter Belastung des Gleitlagers 3 und demgemäß geminderter Lebensdauer der Spannvorrichtung an sich, wirkungsvoll reduziert ist.

Es wurde des Weiteren gefunden, dass sich der Hohlzapfen 11 besonders zur Aufnahme eines Montagewerkzeugs eignet, um die Spannvorrichtung in eine Montageposition zu überführen, die ihrerseits beispielsweise die einfache Montage oder Demontage des Zugmittels gestattet. Aufgrund der Tatsache, dass der Hohlzapfen 11 koaxial zur Drehachse des Spannrollenträgers 6 angeordnet ist, ist in besonders vorteilhafter Weise eine zentrale Krafteinleitung realisierbar.

Insoweit kann zumindest der Endabschnitt des Hohlzapfens 11, wie vorliegend gezeigt, beispielsweise eine Werkzeugaufnahme 13 in Form eines Außensechskantes aufweisen, an welchem ein entsprechender Schraubenschlüssel ansetzbar ist.

Die Erfindung beschränkt sich jedoch nicht auf dieses Ausführungsbeispiel, sondern umfasst jedwede Gestaltung des Hohlzapfens 11, die zur formschlüssigen Aufnahme eines Werkzeugs geeignet ist. So ist die Erfindung demgemäß auch nicht auf eine entsprechend geformte Außenkontur des Hohlzapfens 11 beschränkt, sondern umfasst auch geeignete Ausbildungen der Innenkontur desselben, beispielsweise durch Einarbeitung eines Innensechskants oder dergleichen. Schließlich ist es auch denkbar, stattdessen die Stirnseite einer Vollwelle mit einer Torx-Aufnahme oder ähnliches zu versehen.

### Bezugszeichen

- 1: Basisteil
- 2: Flansch
- 3: Gleitlagerung
- 3a, b: Gleitlagerbuchsen
- 4: Welle
- 5: Torsionsfeder
- 6: Spannrollenträger
- 7: Spannrolle
- 8: Reibscheibe
- 9: Reibbelag
- 10: Verbindungsbereich (Welle 4 / Spannrollenträger 6)
- 11: Hohlzapfen
- 12: Stirnwandung (Spannrollenträger 6)
- 13: Werkzeugaufnahme
- "s": Distanz zwischen Mitte Spannrolle 7 und Mitte Gleitlagerung 3

## Patentansprüche

1. Spannvorrichtung für einen Zugmitteltrieb, wie einen Riemen- oder Kettentrieb, mit einem ortsfesten Basisteil (1) und mit einer in dem Basisteil (1) über eine Gleitlagerung (3) gelagerten Welle (4), die einenends mit einem vermittels einer Torsionsfeder (5) zum Basisteil (1) vorgespannten Spannrollenträger (6) mit Spannrolle (7) und anderenends mit einer Reibscheibe (8) dreh- und achsfest verbunden ist, wobei sich der Spannrollenträger (6) und die Reibscheibe (8) axial am Basisteil (1) abstützen und der Verbindungsbereich (10) des Spannrollenträgers (6) mit der Welle (4) durch einen axial frei aus dem Spannrollenträger (6) auskragenden Hohlzapfen (11) gebildet ist, **dadurch gekennzeichnet, dass** zur Vergrößerung der Abstützlänge der Gleitlagerung (3) und Minimierung der Distanz "s" zwischen der Mitte des Zugmittels oder der Spannrolle (7) und der Mitte der Gleitlagerung (3) die Gleitlagerung (3) sich bis in den Bereich der Stirnwandung (12) des Spannrollenträgers (6) oder darüber hinaus bis in den Bereich des Hohlzapfens (11) erstreckt.

2. Spannvorrichtung nach Anspruch 1, **dadurch gekennzeichnet, dass** zumindest ein Endabschnitt des Hohlzapfens (11) oder der Welle (4) zur Aufnahme eines Montagewerkzeugs ausgebildet ist.

3. Spannvorrichtung nach Anspruch 1 oder 2, **dadurch gekennzeichnet, dass** die Welle (4) durch Presssitz und Rändelung mit dem Hohlzapfen (11) und der Reibscheibe (8) verbunden und/oder mit denselben verstemmt ist.
